# EUROPEAN PATENT APPLICATION

(11) **EP 4 768 171 A1**
(43) Date of publication of application: **01.07.2026**
(21) Application number: 24855158.2
(22) Date of filing: 23.08.2024
(51) Int. Cl.: B23K 35/36, B23K 35/365

(54) **WELD ANTI-SPATTER COATING FOR SURFACES**

(30) Priority: 24.08.2023 BR 102023017044
(71) Applicant: Nanum Nanotecnologia S/A, 33240-100 Lagoa Santa AP (BR)
(72) Inventor: PAULINELLI, Laura Ribeiro, 30240-120 Belo Horizonte (BR); CONTADINI, José Fernando, 33239-336 Lagoa Santa (BR); LAGE, Wagner Parreiras, 32015-040 Contagem (BR)
(74) Representative: Angerhausen, Christoph
(86) International application number: PCT/BR2024/050378
(87) International publication number: WO 2025/039060

(57) **Abstract**

The present invention belongs to the area of materials engineering. The present invention relates to a anti-spatter welding coating that has an innovative technology
in protecting against weld spatter originated during welding processes. The formed protective film has, in its composition, functionalized nanoparticles with sizes ranging from 10 to 100 nm, dispersed in polymeric matrices giving rise to composites that provide the film with unique properties, which effectively prevent the adhesion of spatter. The coating of the present invention consists of the application and drying of a liquid paint with low solids content, from 2.5 to 6.0%, composed of a co-solvent system, in which the majority, about 50 to 70%, by mass,
and deionized water and 20 to 40% are alcohol-type solvents or equivalents. The coating does not require curing processes, consumes little energy, has a reduced cost and is extremely environmentally friendly (eco-friendly) and for the health of the
worker, not containing fluorinated materials. The paint disclosed herein has excellent adhesion on metal surfaces, withstands high temperatures of up to 600°C,
has adjustable viscosity (400 to 1200 cP), good lubricity and results in a film that, after drying, has a thickness that can reach values between 5 µm and 30 µm and an adjustable torque of 1 N/m up to 10 N/m. This solution designed for the automotive market also extends to other types of market that need to eliminate the loss or rework of metal parts contaminated with weld spatter.

## Description

### TECHNICAL FIELD

The present invention patent consists of a water-based anti-spatter welding coating, with technology based on the use of different functionalized nanoparticles and dispersed in polymeric matrices, giving rise to polymeric nanocomposites. The developed coating has good adhesion on metal substrates and, mainly, on nut and screw threads, protecting the fillets against weld spatter from welding processes, such as coated electrode welding (SMAW), MIG/Mag welding (GMAW), tubular wire welding (FCAW) and TIG welding (GTAW).

### BACKGROUND OF THE INVENTION

The principle of the MIG/Mag welding process is based on the use of heat generated by an electric arc that is established between an electrode in a continuous manner, wire-shaped consumable material, and a base metal. The arc allows the continuous casting of the wire that feeds the melt pool. Both the arc and the weld pool are protected from the atmosphere by a gas that may be inert, active, or a mixture thereof. Depending on the origin of this gas, the process can be carried out by MIG (Metal Inert Gas) welding, when the gas is inert, or Mag (Metal Active Gas), when the gas is active, for example. This type of welding is indicated for materials with different thicknesses and compositions, such as ferrous or non-ferrous materials. Among them, those of magnesium, aluminum, copper, nickel and their alloys, high-strength steels and stainless steels.

Weld spatter are metal globules composed of elements such as iron (Fe), aluminum (Al), carbon (C), silicon (Si), manganese (Mn) and others, which are generated during the welding process. They can originate from both the base metal and the filler metal that are melted in the melt pool and splatter around the weld bead, being adhered, for example, to the fillets of nuts and bolts used in the assembly of parts for the automotive, agricultural, industrial sector, etc. These nuts and bolts are also known as positioners or fasteners. The difficulty or impossibility in removing these spatter can compromise the entire welded assembly, as it affects the torque of the parts that will be later positioned, assembled and fixed.

This spatter solution also extends to other types of markets that need to eliminate rework with metal parts contaminated with weld spatter, and eliminate the need for cleaning and the use of utensils to protect these parts in the welding line.

The Nanum anti-spatter welding coating for metal surfaces, presented here, is an effective and low-cost solution to solve this problem and is innovative in the issue of the technology adopted for the non-adhesion of contaminants, for the formation of an extremely adherent film through the use of nanometric materials, in the functionalizations of these materials, in the intensive use of water and in the non-need of an additional curing process of the polymeric film.

This technique of depositing a material on the metal, which prevents the drop of weld, when solidifying, from adhering to it, is not new and several patents on the subject have already been published. However, they all follow a different technology than the one being presented here, as described below. Research carried out in specialized international and national databases found the following relevant results:
U.S. 2007/0054052 A1 discloses the Nycote product that is owned by Nylok Corporation. This innovation consists of a powder coating, which presents in its composition 50 to 75% of fluorinated polymer resins, among which stand out Polytetrafluoroethylene (PTFE), TEFLON, and Poly (lactic acid) better known as PLA; 25 to 50% consist of ceramic precursors or materials that are called *"fillers" (filler).* Among these, compounds of silica, calcium carbonate, calcium fluoride and glass microspheres are exposed. These materials may further be coated by polymeric resins; the remainder of the formulation, i.e., from 0 to 5%, is concentrated in pigments. The fluorinated polymer mask is applied in fasteners for the purpose of protection against contaminants from the welding process of the automotive sector. The process of applying this coating is described in two older patents filed by Nylok, which are US 4,835,819 and US 5,221,170.

Because the Nanum coating is a paint composed of approximately 50% to 70% by mass of water, it has a lower environmental and health and safety impact, as Nycote is a mask composed of up to 75% by mass of fluorinated polymers. This class of polymers presents risks in relation to the release of toxic gases when exposed to elevated temperatures. The working temperature of this class of polymers should be less than approximately 390°C to prevent the release of the toxic tetrafluoroethylene gas.

In this way, the Nanum anti-spatter coating with high water content and with the use of nanoparticles in its composition can deliver the same performance in relation to the non-adherence of weld spatter, dispensing with the use of fluorinated polymers in its formulation. Still regarding the non-use of fluorinated polymers, different from that of Nycote, the Nanum anti-spatter coating has a differential in relation to its manufacturing process, more precisely in the way the nanoparticles are incorporated into the paint formulation. The nanoparticles have chemically bound organic molecules on their surface that are compatible with the various resins (alkyd, polyurethane, acrylic, monocomponent epoxy resins and derivatives of cellulose, propylene and ethylene dispersed in water) normally used in the preparation of paints. The coating process with the organic molecules allows a better deagglomeration of the particles leading to a stable ink, with optimal interaction with the medium in which they are dispersed.

Another important point concerns the application process of both coatings. For the application of Nycote, it is necessary to heat the metal parts to a temperature above the melting temperature of the resin, that is, above 327°C. For the Nanum coating, the parts may or may not be preheated to much lower temperatures, around 100°C and at most 120°C, to promote better adhesion, depending on the formulation used. With this, there is a significant reduction in the energy expenditure of the process.

In the same vein as Nycote, ND LM-1293 is a coating developed by the company ND Industries. The patent for this innovation is US 2015/0056394A. This coating is based on a ceramic precursor (10.0 to 50.0%), a curing agent (0.2 to 0.5%), and a cross linker (5.0 to 20.0%) that can be used depending on the resin applied. In addition, they may also contain additives such as surfactants, catalysts, suspending, dispersing and freeze-preventing agents, such as ethylene glycol. Release agents, including graphite, clay, silicates, boron nitride, aluminosilicate, metal oxide nanoparticles, among others, may also contain in the coating formulation. The solvent of the paint vehicle will depend on which medium the resin used will solubilize.

Like the Nanum anti-spatter coating, the examples cited in the above patent present water in their formulation, but require, for their application, more than one curing process at elevated temperatures (between 100°C to up to 200°C) for longer periods (greater than 10 minutes). The Nanum coating does not require curing processes because it is a paint composed basically of water, as already mentioned. The coated part may or may not be preheated and after the application of the film, for productivity gain, it is heated only once to a temperature close to 100°C, at most up to 120°C, to promote total evaporation of the solvent, for a short period, between 2 and 5 minutes only. Thus, the application process of the present invention implies a lower process energy expenditure when compared to the coating application process of ND Industries.

Another important point that differentiates the Nanum coating is the non-use of solvents and aromatic resins, which are cited in the coating formulation of ND Industries. These types of chemical compounds are toxic, making their use and handling dangerous to humans.

US 2005/0109750 A1 discloses a method for preventing the adhesion of weld slag accumulations and/or facilitating the cleaning of the contaminated surface. The invention consists of a coating with viscosity comprised between 300 and 900 cP (61 to 78 KU) in mud form that contains a high amount of solids, between 10 and 70% and no more than 5% of materials that are decomposed above 1000°C. The application of the developed coating was directed to the welding machines.

Unlike the above patented coating which has a high solids amount, about 70%, the Nanum coating has an amount of only 2.5 to 6.0% in solids content. This reduced number of solids is possible due to the use of nanoparticles in the formulation. Due to the high reactivity of this class of materials, it is not necessary to add such a high amount of nanoparticles to achieve the desired coating effect. Finally, the thickness of the film formed by the Nanum coating between 5 µm and 30 µm is much less than 250 µm, value informed by US 2005/0109750 A1.

JP 2010075990 addresses an inorganic film-forming compound that will prevent spatter adhesion of welding processes and more specifically of a steel material. Examples of compounds cited in the patent as film formers from hydrolysis or poly condensation are: dimethyldimethoxysilane, dimethyldiethoxysilane, diphenyldimethoxysilane, aluminum n-butoxide, zirconia n-butoxide, titanium tetraisopropoxide, and others. In the formulation an amount of water is added and to promote the hydrolysis process, catalysts such as organic acids can be added. Inorganic materials such as silica, alumina, titania, zirconia, and aluminum titanate may also be incorporated into the paint as prevention agents for spatter adhesion. Solvents that may be used are: ethanol, isopropanol, n-propyl alcohol, alkoxyethanol, ethylene glycol mono alkyl ether, propylene glycol, and water.

The coating proposed by JP 2010075990 is formed by a reaction occurring from the inorganic precursor to polymerize and form the film on the metal part. In contrast, the Nanum anti-spatter coating does not require a chemical reaction to occur for the formation of the film. Another important point is that all the inorganic materials cited in the above patent are not on the nanometer scale and have not undergone any surface functionalization or preparation process to be added to the formulation, different from what is proposed in this present invention.

WO 2007/050689 A1 reports a coating to protect the welding machine, more specifically the weld tip and nozzle assembly for a welding gun, against the spatter that are originated in the process and the exposure to extremely high temperatures. In the patent a formulation for this coating is proposed which consists of: 15 to 70% of a solvent, 10 to 50% of an alkyd resin, 1 to 15% of a crosslinking agent and about 1 to 30% of titanium dioxide. The application method mentioned is by immersing the nozzle of the welding part in the paint solution, followed by a curing step of the resin present, resulting in the formation of the film that will serve as a thermal barrier. Some fluorinated polymer such as PTFE may be added to the formulation. According to the patent, the developed thermal barrier withstands 5, 10 or 15 hours in continuous welding operation, so that at least 10% or 50% of the spatter that may adhere to the coating are removable with manual knocks. Catalysts may also be added in the paint to accelerate the curing process of the added resin and/or polymer, dispersing agents, surfactants, metal oxides, lamellar materials, freeze-preventing agents, and pigments.

In the coating proposed in the invention, there is the possibility of spatter may remain on the coated surface, requiring a subsequent cleaning of the coated surface. The Nanum coating, in turn, ensures the prevention of 100% of the adhesion of weld spatter on the coated surface. As already mentioned above, the present invention does not use fluorinated polymers and does not need to undergo a curing process or more than one thermal event for the formation of the film. Another point is that, unlike the previous patent, the present invention makes use of functionalized nanoparticles.

### SUMMARY OF THE INVENTION

The anti-spatter welding coating for metal surfaces consists of a polymeric film of thickness between 5 µm and 30 µm, which resists point temperatures of up to 600°C, preventing molten weld drops from adhering to the protected metal and also allowing perfect threading on the contact surfaces between nuts and screws, being adjustable for the possibility of torque application between 1.0 N/m and 10.0 N/m; wherein the polymeric film is originated by the application and drying of liquid paint, with adjustable viscosity between 400 cP and 1200 cP, through cosolvent-based formulations containing 50.0% to 70.0% deionized water and 20.0% to 40.0% solvent, by mass, the remainder of the formulation being 2.5% to 6%, composed of thickeners and/or film formers, lamellar materials and functionalized nanometric materials.

The functionalized nanometric materials are composites formed by nanomaterials of size between 10 and 100 nm, dispersed in polymeric matrices; wherein, in the total formulation of the liquid paint, these functionalized nanometric materials are, by mass, from 1.0% to 3.0% refractory nanomaterials and from 1.0% to 3.0% nanometric pigments; wherein the remainder is composed, also by mass, of 0.2% to 0.8% thickeners and/or film formers, including the organic polymers used in the functionalization, resins or formation of the polymeric composites; and from 0.1% to 0.5% lamellar materials for torque adjustment.

One or more solvents used are mainly chosen from lighter alcohols such as isopropanol, ethanol, 1-propanol and/or from slightly heavier solvents such as diacetone alcohol, butyl glycol, methyl lactate, ethyl lactate and ethylene glycol.

The functionalization process of the nanoparticles is carried out through an initial surface treatment, where charges are introduced on the surface of the particles with the addition of strong acids, keeping the pH controlled between 3 and 5; wherein the acids are chosen from the following alternatives: sulfuric acid, phosphoric acid, hydrochloric acid and nitric acid; wherein this acid treatment is done for a period of 1:00h to 1:30h at temperatures that can vary between 80°C and 90°C, in constant agitation; wherein, subsequently, the adhesion of the organic polymers is carried out through controlled chemical reactions that can occur at low temperatures, between 30°C and 45°C, with the addition of one or more polymers chosen from silanes, cellulose derivatives, chitosan and polyethylene glycol, or at higher temperatures, between 85°C and 95°C, when functionalized with carboxylic acids from C₆ to C₈; wherein the functionalization process takes place for a period of 2 hours and subsequently washes are carried out so that all excess functionalizer is removed from the system; in which the control of the wash is done through the pH of the wash waters, and must reach close to the neutral pH, that is, between 7 and 8, and the conductivity of the dispersion must reach values between 600 and 800 µS/cm.

One or more refractory materials used are comprised of nanoparticulate metal oxides chosen from aluminum oxide (Al₂O₃) of the alpha and/or gamma type, magnesium oxide (MgO), zirconium oxide (ZrO), and silicon oxide (SiO₂) alone or in the form of composites with two or more oxides; wherein other materials such as Kaolin, graphite, and magnesite (MgCO₃) may also be used for this purpose.

One or more pigments used are chosen from nanoparticles of titanium dioxide (TiO₂), zinc oxide (ZnO), iron oxide-III (Fe₂O₃), carbon black, Prussian blue {Fe_{4[}Fe(CN)₆]₃} and nanoferrites.

One or more thickeners and film formers used are organic polymers and/or nano polymers, chosen from cellulose, ethylene and propylene derivatives, acrylic polymers, polyurethanes, esters, surfactants and hydrocarbons in general, as well as water-based resins.

One or more lamellar materials used are chosen from carbon materials such as graphene, graphene oxide, reduced graphene oxide and graphite, molybdenum disulfide (MoS₂), boron nitride, aluminosilicates, silicon microspheres, transition metal phosphonates, and transition metal halides.

The application of the liquid paint is carried out by painting methods, such as immersion bath, spray, nozzle, *flooding,* roller or brush and the formation of the film on the substrate happens with simple drying, at room temperature or in greenhouses up to 120° C, to accelerate the process.

a pretreatment of the metal surfaces is carried out before the application of the liquid paint; wherein this treatment consists of cleaning the surface to remove the entire protective oily layer from the part; wherein this cleaning is carried out with degreasers or organic solvents wherein, depending on the formulation of the paint, to allow good adhesion after this cleaning procedure, the part can be heated to a temperature of around 100°C, at most 120°C, before painting; wherein, after painting, to gain paint processing speed, it can also go through a drying oven and be heated only once to a temperature close to 100°C, at most up to 120°C, to promote total evaporation of the solvent, obtained in a short period, between 2 and 5 minutes at most.

### OBJECT OF THE INVENTION

The main objective ofthe present invention is to provide an innovative method of manufacturing a anti-spatter welding coating for metallic surfaces, more environmentally sustainable and lower cost. The application of the coating can be carried out by several simple methodologies, considering that it is a liquid paint, with low and easily adjusted viscosity, which makes intensive use of water and is formed by simple drying, without a chemical or thermal curing process. The use of functionalized nanometric materials in the paint provides the coating with unique characteristics such as high adhesion to the metal substrate, low film thickness, lubricating effect with adjustable torque and resistance to point temperatures up to 600°C, preventing the adhesion of weld spatter when fasteners or other metal substrates are exposed to Mag/MIG welding processes, mainly, or other processes such as coated electrode welding, tubular wire welding and TIG welding.

The coating applies to all sectors that need to use in their various welding processes and that present problems with the spatter generated from these processes. In addition to the automotive sector, we can mention examples of applications in other sectors, such as: railway industry, manufacture of overhead cranes, beams, excavators, tractors, among others.

The process claimed in the present invention is fundamentally based on the production of a paint incorporating metal oxide nanoparticles with a size range between 10 nm and 100 nm. The nanoparticles are functionalized and dispersed in a polymer matrix giving rise to composites that exhibit differentiated thermal and mechanical properties.

### BRIEF DESCRIPTION OF THE DRAWINGS

Figure 1 shows a schematic of the sequence of processing and introduction of materials, which comprise the bases of the innovations presented in this patent, the production of a special paint and its transformation into an original anti-spatter welding coating on metal surfaces, mainly in fasteners or positioners.
Figure 2 shows the graph of the size distribution of a pigment used in the Nanum anti-spatter coating. This graph was obtained from dynamic light scattering analysis, known as DLS. Brookhaven's equipment, the NanoBrook Series, was used to perform this technique.
Figure 3 shows the graph of the size distribution of a refractory material used in the Nanum anti-spatter coating (DLS - Brookhaven, NanoBrook Series).

### DESCRIPTION OF THE INVENTION

The invention concerns the production and manufacture of an innovative anti-spatter welding coating on metal surfaces, which prevents molten weld drops from adhering to the protected metal and also, in the case of protection of fasteners and positioners (screws and nuts), enables perfect threading on the contact surface of the threads, as their composition can be easily adjusted for varied torque applications.

This innovation is based, on the one hand, on the design and manufacture of a liquid paint, with low amount of solids, which uses a variety of functionalized nanoparticles. One of the secrets lies in the characteristics of the polymer composites that these homogeneously dispersed nanoparticles in a polymer matrix, thanks to their functionalizations, will have after drying the paint. Thus, this innovation is related to the fact that in its composition there is a combination of functionalized metal oxide nanoparticles, of sizes comprised between 10 nm and 100 nm, preferably between 20 and 80 nm and more preferably between 30 and 50 nm.

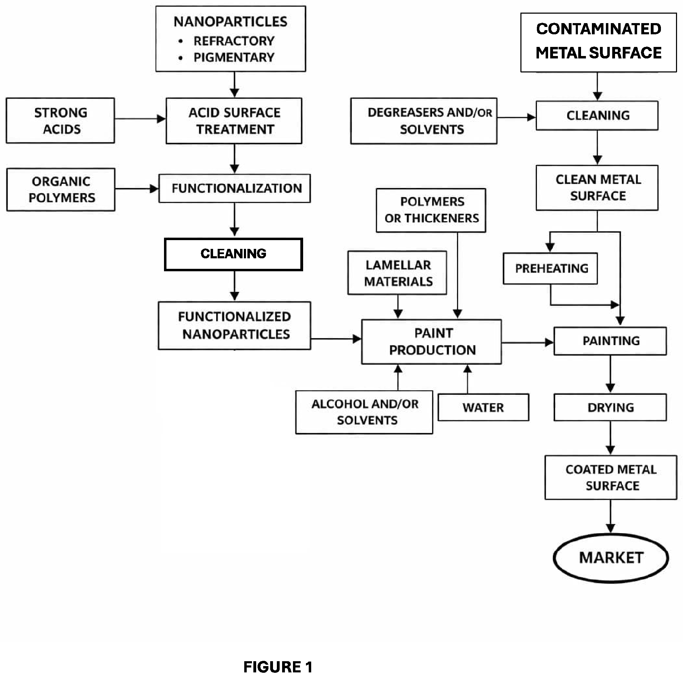

And, on the other hand, it is based on the productive process of painting and forming the coating that this paint provides, as it is an extremely sustainable paint in terms of the health and safety of workers, the environment and economically, with a large amount of water and cheap solvents such as alcohols. With all this, we have an easy application, great adhesion on the metal surface, low energy consumption in drying, no need for curing processes and promotes the formation of a thin protective polymeric film. Figure 1 schematically shows the interconnection of these two conceptions.

On the side of ink design and production, we have the intensive use of nanoparticles as an innovation. Basically they will fulfill one or two functions: to be refractory or pigmentary. The refractoriness function will allow the film formed with these nanoparticles to prevent contact of the molten weld droplet with the metal to be protected, resisting point temperatures up to 600°C and allowing the molten weld droplet to cool and solidify without adhering to the protected metal. The pigment function allows you to work on the color of the final coating formed and identify the protected parts from the unprotected ones. It is common to choose some pigments that also aid in refractory function. Still dealing with the components present in the paint composition, there are lamellar materials, which allow the adjustment of the acceptable torque for safe threading and, in general, automated by robots, in metal fasteners or positioners. Depending on the configuration of the pair of fasteners or positioners (nuts and bolts), the thickness of the coating is established, as well as the torque range sought, avoiding over-lubrication or excessive friction that can confuse the adjustments of the robots. Typically, these adjustments range between 1 N/m and 10 N/m and are obtained, in the coating, by increasing or decreasing the load of lamellar material in the paint composition.

Another major innovation is the promotion in the nanoparticles of a functionalization process that will make a total difference in the characteristics of the paint and in the polymeric coating formed by them. The functionalizing agents facilitate the dispersion of the nanoparticles in aqueous media, prevent their agglomeration and help maintain the homogeneity and stability of the dispersion. In addition, they provide the desired surface characteristics to the particles so that they can provide an adjustable rheology for the formulated paint and present chemical compatibility with the other components of the paint, as well as with the surface on which the coating will be applied. Thereby, the anti-spatter welding coating for metal surfaces can be efficiently formed by a polymeric film of low thickness between 5 µm and 30 µm, preferably between 5 and 20 µm.

After selecting the nanoparticles to be used, the first step in the paint production process is their functionalization. This functionalization begins with an acid treatment of the surface, a surface preparation promoted by a change in the pH of the medium to an acidic range, approximately for pH values between 3 and 5. When these nanoparticles are polarized, that is, when charges have been introduced on their surface, chemical bonding with other molecules is facilitated, such as, for example, with organic polymers. This surface modification is done with one or more strong inorganic acids such as sulfuric acid, phosphoric acid, hydrochloric acid and nitric acid. This acid treatment is done for a period between 1h and 1:30h, in constant agitation, at temperatures that can vary between 80°C and 90°C. Vigorous agitation of the system is essential to ensure repulsion between the particles and prevent them from agglomerating.

After the acid treatment, the de facto functionalization is carried out, a step in which the nanoparticles are bonded with the organic polymers, through controlled chemical reactions at lower temperatures, between 30°C and 45°C when one or more polymers, added under stirring, are chosen from silanes, cellulose derivatives, chitosan and polyethylene glycol. Or occur at higher temperatures, between 85°C and 95°C, when C₆ to C₈ carboxylic acids are chosen. This functionalization process takes place for an approximate period of 2 hours and, subsequently, washes are carried out so that all excess functionalizer and acid are removed from the system. The control of the wash is done through the pH of the wash waters that must reach close to neutral pH, that is, between 7 and 8, and the conductivity of the dispersion must reach values between 600 and 800 µS/cm.

Subsequently, the functionalized nanoparticles and lamellar materials are incorporated into the other paint components through simple mixing processes and slow dispersion of charges to ensure total homogenization between all substances.

Thus, the anti-spatter welding coating for metal surfaces will be formed by applying, on the surface to be protected, a liquid paint, composed of a cosolvent system, in which the majority, about 50.0 to 70.0% by mass, is deionized water and 20.0 to 40.0% by mass is equivalent to alcohol-type solvents, which may be an alcohol with a lower boiling point, such as isopropanol (PE 82.5°C), ethanol (PE 78.4°C), 1-propanol (PE 97°C), or heavier solvents such as diacetone alcohol (PE 167.9°C), butylglycol (PE 171.2°C), methyl lactate (PE 145°C), ethyl lactate (PE 154°C) and ethylene glycol (PE 197°C). The selection of the solvent is related to the polymers adopted and the drying time, making the choice of the paint form to be used more flexible.

The remainder of the formulation consists of, by mass: 1.0 to 3.0% refractory nanomaterials; 1.0 to 3.0% nanometric pigments; 0.2 to 0.8% thickeners and/or film formers, including organic polymers, resins, and the formation of polymer composites; and 0.1% to 0.5% lamellar materials.

Among the materials that can be used as refractories, nanoparticulate metal oxides are indicated, mainly aluminum oxides (Al₂O₃) of the alpha and gamma type, magnesium oxide (MgO), zirconium oxide (ZrO) and silicon oxide (SiO₂), alone or in the form of composites with two or more oxides. Other materials such as Kaolin, graphite and magnesite (MgCO₃) are also refractory materials that can be used. The purpose of using the refractory materials in the formulation is to grant the coating the property of resistance to elevated temperatures, resulting in non-adherence of the weld spatter.

Pigments that can be used, alone or together to color the coating are nanoparticles of titanium dioxide (TiO₂), zinc oxide (ZnO), iron (III) oxide (Fe₂0₃),carbon black, Prussian blue {Fe₄[Fe(CN)₆]₃}, and nanoferrites.

Organic polymers and nanopolymers, which can be derived from cellulose, ethylene and propylene, acrylic polymers, polyurethanes, esters, surfactants and hydrocarbons in general, as well as those that can be derived from various water-based resins such as: acrylics, polyurethanes, epoxy ester, alkyds, silicone, silicates, among others, are added in the formulation as thickeners and/or film formers.

Finally, the lamellar materials that will give the lubricity property to the coating, enabling adjustments in the torque of the formed film, are chosen alone or together with others, among the carbon materials, such as graphene, graphene oxide, reduced graphene oxide, graphite and molybdenum disulfide (MoS₂), boron nitride, aluminosilicates, silicon microspheres, transition metal phosphonates and transition metal halides.

The paint will have a total solids between 2.5% and 6.0%, and must have an acidic character, with a pH in a range between 4 and 6. This acidity is essential to ensure good adhesion of the coating on metal surfaces. The pH adjustment must be made using one or more strong acids chosen from sulfuric acid, phosphoric acid, hydrochloric acid and nitric acid. The viscosity obtained can be adjusted depending on the amount of thickener added, to suit the type of application chosen. This viscosity range can be quite extensive, starting with values of 400 cP and reaching values of 1200 cP, when measured with a Brookfield viscometer. For example, to apply this dip bath coating, an optimal viscosity range for the product is between 700 cP and 1000 cP at 25°C.

This whole procedure of preparation of the surface of the nanoparticles and functionalization, as well as the use of specific equipment to incorporate them into polymeric matrices, such as dispersers and shearers, guarantee to the film, which will be later formed, uniformity and continuous distribution of the loads along the coating and this leads us to the second conception presented in this patent that deals with the application of this innovative paint and the innovative characteristics and advantages it provides to the painting process.

As is well known, the quality of the adhesion of a coating on a given surface is increased by cleaning this surface. For this reason, it is suggested that the application of the anti-spatter welding coating described herein be done after a pre-cleaning of the metal surface, ensuring that all or almost all residual dirt and protective oil, normally used in nuts and bolts, are eliminated. For this pre-cleaning, one or more alcohol-type organic solvents are used, such as isopropanol or ethanol, acetone and/or commercial degreasers, which are usually already used in these industrial processes.

Another essential, but not mandatory, step to maximize the adhesion of the coating on the substrate is the preheating of the parts before painting, with temperatures around 100°C, but not exceeding 120°C. In view of the fluidity of the paint, its flexibility in adjusting the viscosity and speed of evaporation of the solvents, the painting can be carried out by different methods, such as immersion bath, spray, nozzle, *flooding,* roller or brush. This painting can be done in more than one coat, but ideally it is done in a single layer and the paint parameters (immersion, spray time, removal speed, rotation, etc.) must be controlled so that the final coating layer has, depending on the "design" of the part, a thickness of at least 5 µm and at most 30 µm.

After painting, the part can dry at room temperature, as long as it does not come into contact with another part for a minimum of 4 hours. Thus, it is strongly recommended that the coated part undergoes an oven drying process to ensure total evaporation of the water and solvent present in the formulation in a much shorter period of time. For this drying in an oven, it is suggested to use temperatures around 100°C, and preferably not to exceed 120°C. Drying will take place between 2 minutes and 5 minutes maximum. Once this drying is completed, the coating is ready and the part can be sent for use or for commercialization.

The advantages of this anti-spatter welding coating for metal surfaces are:
The coating has, in its composition, an amount between 50% and 70% by mass of water. In this way, the product has an environmental and sustainable bias different from its competitors that are based on long-chain fluorinated polymers or have in their composition solvents and/or resins with aromatic rings, toxically aggressive to human health and the environment;
The characteristics of the polymeric composites formed in the coating allow the formation of a thin and uniform film on the deposited surface, without presenting paint defects, corrosion points and have an excellent adhesion on metallic substrates.

As it is a liquid coating with adjustable viscosity (400 to 1200 cP), it can be applied by different techniques such as immersion bath, spray, nozzle, *flooding,* roller or brush. These techniques allow a larger scale application of the coatings on the parts, thus reducing costs and application time;
The coating application process does not require curing procedures, that is, it is not necessary to use high temperatures (above 120°C) to promote the formation of the film on the fasteners and metal surfaces.

In addition, the anti-spatter coating:
Efficiently repels weld spatter from welding processes, mainly from MIG/Mag processes;
It has good lubricity and is easily adjustable so that the torque is close to 1.0 N/m for M5, M6 and M8 screws, for example, and up to larger torques such as 2 N/m, 3.5 N/m, 5 N/m and 10 N/m for M10, M12, M14 and M16 screws respectively.
It is resistant to solvents such as acetone, isopropanol, ethanol and other alcohols;

Withstands high point temperatures of up to 600° C, ensuring its efficiency for the non-adhesion of weld drops on the protected surface.

### EXAMPLES

In the following examples the coated fasteners were all subjected to operational tests when weld spatter were generated next to them and subsequently approved when threaded to the maximum limit, at the established torque, without verification of problems.

### Exemplification - case 1

The paint was formulated using the following components and proportions: 36g deionized water, 18g ethyl alcohol, 0.08 g graphene oxide, 0.4g carboxymethylcellulose (CMC), 1.0g nano-sized aluminum oxide (Al₂O₃), and 1.0g titanium dioxide (TiO₂). The nanoparticles underwent the acid treatment procedure using nitric acid, and functionalization with the cellulose-derived polymer, carboxymethylcellulose.

The M6 bolts were cleaned with commercial degreasers and preheated to a temperature of 100°C for 2 minutes to improve coating adhesion. The paint was dipped for 10 seconds and the formed film was dried at room temperature for 24 hours. The viscosity achieved for this formulation was comprised between 400 and 600 cP and the pH of the formulation was adjusted at the end, with hydrochloric acid (HCI), to a range between 5 and 6. The fasteners were approved with the film thickness between 5 and 10 µm, and a torque of approximately 1 N/m.

### Exemplification - case 2

The paint was formulated using the following components and proportions: 41.9g deionized water, 25.6g isopropyl alcohol, 0.08 g graphite, 0.4g polypropylene, 1.0g nanometric magnesium oxide (MgO), and 1.0g carbon black. The nanoparticles underwent the procedure of acid treatment with phosphoric acid, and functionalization with the polypropylene polymer. After this process, the already functionalized metal nano-oxides were added to the paint solvents, along with the polypropylene and graphite.

The positioners also went through cleaning processes with commercial degreasers, but were not preheated. In this example, the *flooding* method was used to apply the coating. After application, the coated positioners were taken immediately to the oven and were heated at 100°C for 5 minutes to promote rapid evaporation of the solvents. For this formulation, the adjusted viscosity was comprised between 600 and 800 cP and the pH was between 5 and 6, adjusted with H₃PO₄. The positioners were approved with the film thickness between 8 and 13 µm and a torque close to 2 N/m.

### Exemplification - case 3

The paint was formulated using the following components and proportions: 36g deionized water, 18g ethyl alcohol, 0.08 g molybdenum disulfide (MoS₂), 0.2g polyethylene oxide (PEO), 1.2g nano-sized zirconium oxide (ZrO), and 1.0g nanoparticulate prussian blue. The nanoparticles underwent the acid treatment procedure using the phosphoric acid and functionalization with the PEO polymer.

The M12 screws that were coated were cleaned and preheated to a temperature of 80°C for 2 minutes. For the application of this formulation, the immersion method was chosen. The film was dried in an oven at around 100°C for 4 minutes. For this formulation, the viscosity achieved was in the same range as that obtained in example 1, i.e. between 900 and 1200 cP and the pH was adjusted between 5 and 6 with nitric acid (HNO₃). The screws were approved for a torque close to 3.5 N/m, and a thickness comprised between 9 and 18 µm.

### Exemplification - case 4

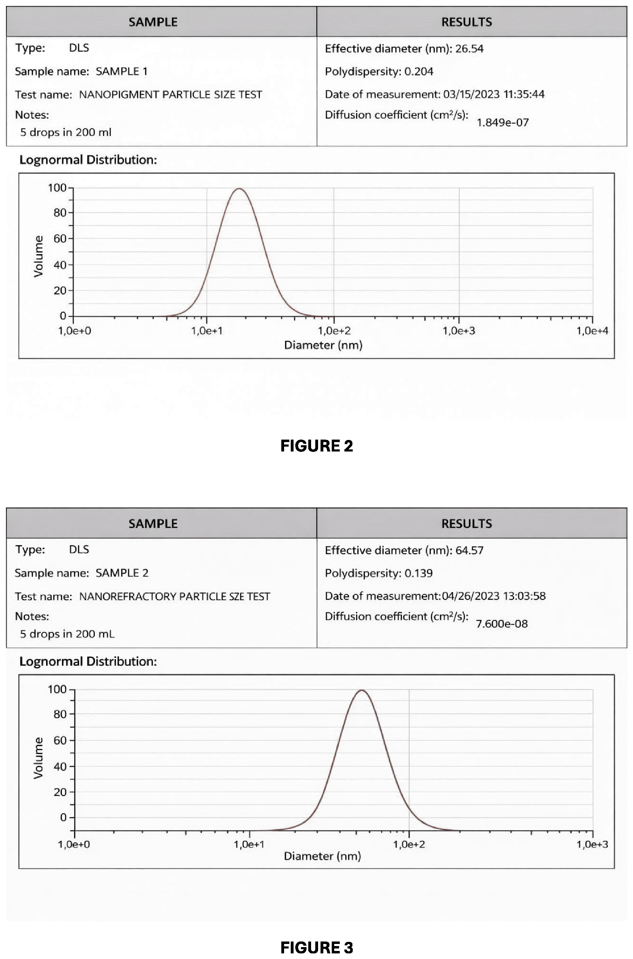

The paint was formulated using the following components and proportions: 48.6g deionized water, 18.7g isopropyl alcohol, 0.1g cobalt phosphonate, 0.3g water-based polyurethanes (PU), 1.0g magnesite (MgCO₃), and 1.0g Ni-Zn nanoferrite. Cobalt phosphonate nanoparticles and Ni-Zn nanoferrites were subjected to acid treatment using hydrochloric acid, functionalized with a polyurethane, and dispersed in PU resin for aqueous systems. Figure 2 shows the size distribution of the nanoparticles used in this formulation. The PU resin was initially added into the mixture of water and isopropanol and allowed to homogenize well. After complete solubility of the resin, the functionalized nanoparticles were added to the mixture.

The positioners have gone through a cleaning process and have not been preheated. For the application of this formulation, the spray method was chosen. The coated positioners were dried in an oven with a temperature not exceeding 100°C for 5 minutes. For this formulation, the viscosity achieved was in a range between 600 and 800 cP. The pH was also between 5 and 6 and was adjusted with HCl. The positioners were approved with thickness of the formed film that comprised between 15 and 20 µm and a torque close to 5 N/m.

### Exemplification - case 5

The paint was formulated using the following components and proportions: 41.7g deionized water, 25.7g ethyl alcohol, 0.1g boron nitride, 0.2g water-based epoxy ester resin, 0.5g nanometric silicon oxide (SiO₂), 0.5g kaolin, and 1.0g carbon black. The acid treatment procedure was performed with the phosphoric acid and the functionalization with the polyepoxide polymer. The components were added to the paint vehicle and mixed intensively to ensure full homogenization and dispersion between the substances.

The application stage also required a prior cleaning of the fasteners (M8 screws), but they were not preheated. The *flooding* method was used and the film formed on the fillets of the fasteners was dried in an oven with a temperature around 100°C for 5 minutes. For this formulation, the viscosity achieved was between 700 and 900 cP and the pH between 5 and 6 with acid adjustment made using H₃PO₄. The fasteners were approved with a coating thickness comprised between 9 and 14 µm and a torque set close to 1 N/m.

### Exemplification - case 6

The paint was formulated using the following components and proportions: 45.2g deionized water, 22.1g isopropyl alcohol, 0.2g silicon microspheres, 0.3g water-based alkyd resins, 1.0g nano-sized aluminum oxide (Al₂O₃), and 1.0g Co-Mn nanoferrite. Figure 3 shows the measurement of the size of these particles. The nanoparticles were subjected to acid treatment with nitric acid and subsequent functionalization with a polyester and finally dispersed in an alkyd resin. The steps of adding the components to the paint and mixing them were performed using usual dispersers and mixers to ensure complete homogenization between the substances.

The application of the coating was started with the prior cleaning of the fasteners (M16 screws). With the surface free of oil, the brush method was adopted to deposit the film on the fillets of the fasteners. After application of the paint, the coated fasteners were heated in an oven at a temperature around 100°C for 5 minutes, to promote complete drying of the film. For this formulation, the viscosity achieved was between 600 and 800 cP and the pH between 5 and 6 with acid adjustment made using HNO₃. The fasteners were approved with a film thickness between 25 and 30 µm and a torque close to 10 N/m.

### Exemplification - case 7

The paint was formulated using the following components and proportions: 35.7g deionized water, 10g isopropyl alcohol, 8g ethyl alcohol, 0.2g aluminosilicates, 0.3g an acrylic resin, 1.0g aluminum oxide (Al₂O₃), and 1.0g nanometric iron (III) oxide (Fe₂O₃). Al₂O₃ and Fe₂O₃ nanoparticles were treated with phosphoric acid, functionalized with an acrylic polymer, and dispersed on an acrylic resin.

The screws and threads were previously cleaned with commercial degreasers. The application of the coating was done by the sprinkling method. The coated fasteners were heated in an oven at a temperature around 100°C for 5 minutes so that the deposited coating layer was fully dried. The ink was left with a viscosity between 500 and 700 cP and the pH was adjusted with H₃PO₄ and was between 5 and 6. The fasteners were approved with coating thickness values between 5 and 8 µm and a torque around 1 N/m.

## Claims

1. "ANTI-SPATTER WELDING COATING FOR METALLIC SURFACES", **characterized by** a polymeric film of thickness between 5 µm and 30 µm, which resists point temperatures of up to 600°C, preventing molten weld drops from adhering to the protected metal and also allowing perfect threading on the contact surfaces between nuts and screws, being adjustable for the possibility of applying torque between 1.0 N/m and 10.0 N/m; wherein the polymeric film is originated by the application and drying of liquid paint, with adjustable viscosity between 400 cP and 1200 cP, through formulations based on a cosolvent system containing 50.0% to 70.0% deionized water and 20.0% to 40.0% solvent, by mass, the remainder of the formulation being 2.5% to 6%, composed of thickeners and/or film formers, lamellar materials and functionalized nanometric materials.

2. "ANTI-SPATTER WELDING COATING FOR METALLIC SURFACES" according to claim 1, **characterized in that** the functionalized nanometric materials are composites formed by nanomaterials of size between 10 and 100 nm, dispersed in polymeric matrices; wherein, in the total formulation of the liquid paint, these functionalized nanometric materials are, by mass, from 1.0% to 3.0% refractory nanomaterials and from 1.0% to 3.0% nanometric pigments; wherein the remainder is composed, also by mass, of 0.2% to 0.8% thickeners and/or film formers, including the organic polymers used in the functionalization, resins or formation of the polymeric composites; and from 0.1% to 0.5% lamellar materials for torque adjustment.

3. "ANTI-SPATTER WELDING COATING FOR METALLIC SURFACES" according to claim 1, **characterized in that** the one or more solvents used are mainly chosen from lighter alcohols such as isopropanol, ethanol, 1-propanol and/or from slightly heavier solvents such as diacetone alcohol, butylglycol, methyl lactate, ethyl lactate and ethylene glycol.

4. "ANTI-SPATTER WELDING COATING FOR METALLIC SURFACES" according to claims 1 and 2, **characterized in that** the functionalization process of the nanoparticles is carried out through an initial surface treatment, where fillers are introduced on the surface of the particles with the addition of strong acids, keeping the pH controlled between 3 and 5;
wherein the acids are chosen from the following alternatives: sulfuric acid, phosphoric acid, hydrochloric acid and nitric acid; wherein this acidic treatment is done for a period of 1:00h to 1:30h at temperatures that can vary between 80°C and 90°C, under constant stirring;
wherein thereafter the adhesion of the organic polymers is carried out through controlled chemical reactions that can take place at low temperatures, between 30°C and 45°C, with the addition of one or more polymers chosen from silanes, cellulose derivatives, chitosan and polyethylene glycol, or at higher temperatures, between 85°C and 95°C, when functionalized with C6 to C8 carboxylic acids;
wherein the functionalization process takes place for a period of 2 hours and subsequently washes are performed so that all excess functionalizer is removed from the system;
wherein the control of the wash is done through the pH of the wash waters, and should reach close to neutral pH, i.e., between 7 and 8, and the conductivity of the dispersion should reach values between 600 and 800 µS/cm.

5. "ANTI-SPATTER WELDING COATING FOR METALLIC SURFACES" according to claims 1 and 2, **characterized in that** the one or more refractory materials used are comprised of nanoparticulate metal oxides chosen from aluminum oxide (Al2O3) of the alpha and/or gamma type, magnesium oxide (MgO), zirconium oxide (ZrO) and silicon oxide (SiO2) aloneor in the form of composites with two or more oxide;
wherein other materials such as Kaolin, graphite and magnesite (MgCO₃) may also be used for this purpose.

6. "ANTI-SPATTER WELDING COATING FOR METALLIC SURFACES" according to claims 1 and 2, **characterized in that** the one or more pigments used are chosen from nanoparticles of titanium dioxide (TiO2), zinc oxide (ZnO), iron oxide-III (Fe2O3), carbon black, Prussian blue {Fe4[Fe(CN)6]3} and nanoferrites.

7. "ANTI-SPATTER WELDING COATING FOR METALLIC SURFACES" according to claims 1 and 2, **characterized in that** the one or more thickeners and film formers used are organic polymers and/or nano polymers, chosen from derivatives of cellulose, ethylene and propylene, acrylic polymers, polyurethanes, esters, surfactants and hydrocarbons in general, as well as water-based resins.

8. "ANTI-SPATTER WELDING COATING FOR METALLIC SURFACES" according to claims 1 and 2, **characterized in that** the one or more lamellar materials used are chosen from carbon materials such as graphene, graphene oxide, reduced graphene oxide and graphite, molybdenum disulfide (MoS2), boron nitride, aluminosilicates, silicon microspheres, transition metal phosphonates and transition metal halides.

9. "ANTI-SPATTER WELDING COATING FOR METALLIC SURFACES", according to claim 1, **characterized in that** the application of the liquid paint is carried out by painting methods, such as immersion bath, spray, nozzle, flooding, roller or brush and the formation of the film on the substrate happens with simple drying, at room temperature or in greenhouses up to 120°C, to accelerate the process.

10. "ANTI-SPATTER WELDING COATING FOR METALLIC SURFACES" according to claim 9, **characterized in that** a pretreatment of the metal surfaces is performed prior to the application of the liquid paint;
wherein this treatment consists of cleaning the surface to remove the entire protective oily layer from the part;
wherein such cleaning is performed with degreasers or organic solvents
wherein, depending on the formulation of the paint, to allow good adhesion after this cleaning procedure, the part may be heated to a temperature of around 100°C, at most 120°C, prior to painting;
wherein, after painting, to gain paint processing speed, it can also pass through a drying oven and be heated only once to a temperature close to 100°C, at most up to 120°C, to promote total evaporation of the solvent, obtained in a short period, between 2 and 5 minutes at most.
